# EUROPÄISCHE PATENTSCHRIFT

(11) **EP 0 700 875 B1**
(45) Veröffentlichungstag und Bekanntmachung des Hinweises auf die Patenterteilung: **01.03.2000**
(21) Anmeldenummer: 95112854.5
(22) Anmeldetag: 16.08.1995
(51) Int. Cl.: C02F 11/00, C02F 11/12

(54) **Verfahren und Vorrichtung zum kontinuierlichen Aufschliessen von organischen Bestandteilen eines fliessfähigen,unlösliche anorganische Partikel enthaltenden Behandlungsgutes**
Method and apparatus for continuous solubilizing of organic compounds of a flowable material containing insoluble inorganic compounds
Procédé et dispositif pour la solubilisation continue de composants organiques d'une matière coulante contenant des particules anorganiques insolubles

(30) Priorität: 09.09.1994 DE 4432154
(43) Veröffentlichungstag der Anmeldung: 13.03.1996
(73) Patentinhaber: Draiswerke GmbH, 68305 Mannheim (DE)
(72) Erfinder: Stehr, Norbert, Dr.-Ing., D-67269 Grünstadt (DE)
(74) Vertreter: Rau, Manfred, Dr. Dipl.-Ing.

(56) Entgegenhaltungen:
- US-A- 4 038 184

## Beschreibung

Die Erfindung betrifft ein Verfahren zum kontinuierlichen Aufschließen von organischen Bestandteilen eines fließfähigen, unlösliche anorganische Partikel enthaltenden Behandlungsguts, insbesondere von Schlamm, und eine Vorrichtung zur Durchführung des Verfahrens.

Aus der DE 39 19 176 C2 ist es bekannt, organischen Schlamm, wie Klär-Schlamm und Schlamm aus landwirtschaftlichen und Fisch-Abfallprodukten anaerob abzubauen. Um den anaeroben Abbau zu verbessern bzw. zum Teil erst zu ermöglichen, werden die organischen Bestandteile des Schlammes mechanisch aufgeschlossen, indem deren Zellwände mechanisch zerstört werden. Hierzu wird eine Naßmahlbehandlung in einer Walzenmühle, einer vibrierenden Kugelmühle, einer Zentrifugenkugelmühle, einer mittelgroßen Rührmühle und einer Kolloidmühle vorgeschlagen. Konkret wird hierbei beschrieben, eine Vorrichtung einzusetzen, bei der eine sich drehende Scheibe, die in ein zylindrisches Gefäß eingebaut ist, mit hoher Drehzahl angetrieben wird, wodurch in dem Gehäuse enthaltene kleine Kugeln, bei denen es sich um Mahlhilfskörper handelt, kräftig gerührt werden. Diese kleinen Kugeln üben eine Scherkraft auf das Behandlungsgut aus und zertrümmern es. Für das Löslichmachen von Schlamm werden Mahlhilfskörper mit einem Durchmesser von 0,05 bis 1 mm eingesetzt. Bei Verwendung von Mahlhilfskörpern dieser Größe ist eine Umdrehungsgeschwindigkeit für die Drehscheibe zwischen 1000 bis 3000 min⁻¹ entsprechend einer Umlaufgeschwindigkeit von 10 bis 30 m/sec vorgesehen. Bei Behandlung von normalem Schlamm soll eine Behandlungsdauer von 5 bis 60 Minuten angemessen sein.

Derartiges fließfähiges Behandlungsgut, und zwar insbesondere Schlamm, kann sehr niedrigviskos sein, so daß der Mahlhilfskörperverschleiß in der Rührmühle bzw. Rührwerksmühle außerordentlich hoch ist. Des weiteren weist derartiges Behandlungsgut sehr oft verhältnismäßig große Fremdpartikel auf, die die Trenneinrichtung zusetzen können, wodurch dann wiederum die Abtrennung der Mahlhilfskörper vom behandelten Gut bei einem kontinuierlichen Betrieb stark beeinträchtigt wird. Deshalb ist die Abtrennung der Mahlhilfskörper vom behandelten Gut bei einem kontinuierlichen Betrieb außerordentlich schwierig.

Aus der DE 40 30 668 A1 ist es ebenfalls bekannt, biologisch gebildete Schlämme durch Desintegration aufzubrechen. Hierbei werden die Zellwände der den organischen Anteil des Schlammes ausmachenden Mikroorganismen zerstört.

Der Erfindung liegt die Aufgabe zugrunde, ein Verfahren und eine Vorrichtung der eingangs angegebenen Art zu schaffen, das einen kontinuierlichen Aufschluß der organischen Bestandteile des Behandlungsguts in besonders einfacher Weise ermöglicht.

Diese Aufgabe wird bei einem Verfahren der eingangs angegebenen Art durch die Merkmale des Anspruches 1 gelöst. Sie wird weiterhin bei einer Vorrichtung der eingangs genannten Art durch die Merkmale des Anspruches 6 gelöst. Der Kern der Erfindung besteht darin, daß die ohnehin im Behandlungsgut enthaltenen unlöslichen anorganischen Partikel mit einer größeren Dichte als die aufzuschließenden organischen Bestandteile durch die auf sie ausgeübten Zentrifugalwirkungen im Behandlungsraum aufkonzentriert und dort gleichsam als Mahlhilfskörper verwendet werden. Es werden also keine eigenständigen Mahlhilfskörper verwendet; weiterhin ist keine Mahlhilfskörper-Rückhaltevorrichtung notwendig, da die unlöslichen anorganischen Bestandteile, die die Funktion von Mahlhilfskörpern ausüben, Bestandteile des Behandlungsguts sind. Bei dem Behandlungsraum kann es sich - bevorzugt - um den Mahlraum einer nach Art einer Rührwerksmühle aufgebauten Vorrichtung handeln; es kann aber auch eine Zentrifuge oder dergleichen nach entsprechender Anpassung eingesetzt werden.

Zahlreiche zum Teil erfinderische Ausgestaltungen ergeben sich aus den Unteransprüchen.

Weitere Merkmale, Vorteile und Einzelheiten der Erfindung ergeben sich aus der nachfolgenden Beschreibung von fünf Ausführungsbeispielen anhand der Zeichnung. Es zeigt
- Fig. 1: eine erste nach Art einer Rührwerksmühle aufgebaute Ausführungsform einer Vorrichtung zum Aufschluß von Schlamm im Vertikalschnitt in schematischer Darstellung,
- Fig. 2: eine zweite nach Art einer Rührwerksmühle aufgebaute Ausführungsform einer Vorrichtung zum Aufschluß von Schlamm im Vertikalschnitt in schematischer Darstellung,
- Fig. 3: eine dritte nach Art einer Rührwerksmühle aufgebaute Ausführungsform einer Vorrichtung zum Aufschluß von Schlamm im Vertikalschnitt in schematischer Darstellung,
- Fig. 4: eine vierte nach Art einer Rührwerksmühle aufgebaute Ausführungsform einer Vorrichtung zum Aufschluß von Schlamm im Vertikalschnitt in schematischer Darstellung,
- Fig. 5: eine fünfte nach Art eines Ringmischers aufgebaute Ausführungsform einer Vorrichtung zum Aufschluß von Schlamm im Vertikalschnitt in schematischer Darstellung,
- Fig. 6: eine sechste nach Art einer Rührwerksmühle aufgebaute Ausführungsform einer Vorrichtung zum Aufschluß von Schlamm im Vertikalschnitt in schematischer Darstellung und
- Fig. 7: ein Regelungs-Blockschaltbild für eine Rührwerksmühle.

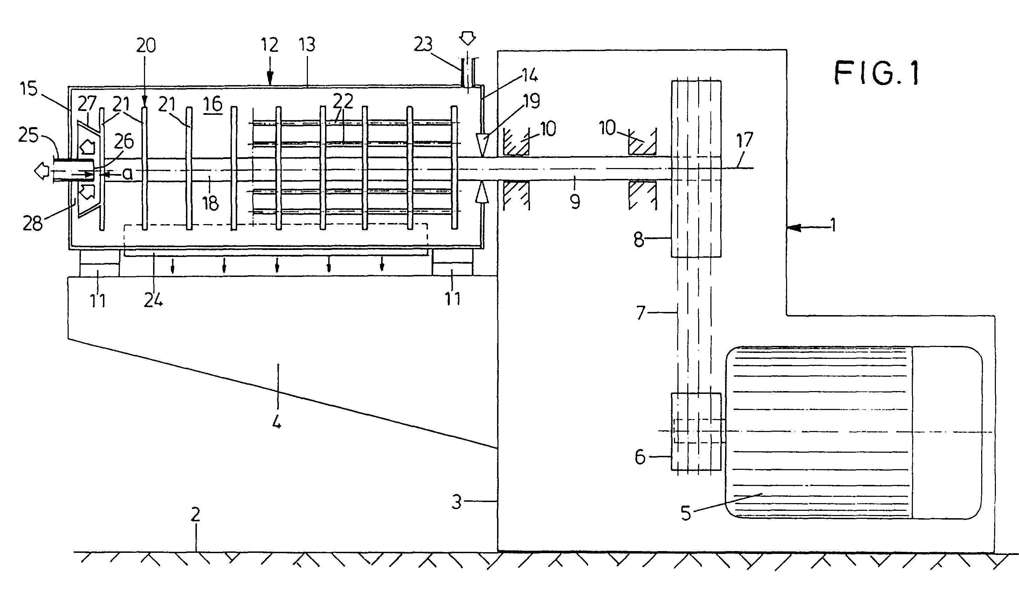

Bei den Ausführungsformen nach den Fig. 1 bis 3 handelt es sich im Grundsatz um sogenannte liegende Rühnverksmühlen. Diese weisen in üblicher Weise einen Ständer 1 auf, der auf dem Boden 2 abgestützt ist. An der Vorderseite 3 des Ständers 1 ist ein Tragarm 4 angebracht.

Im Ständer ist ein gegebenenfalls drehzahlregelbarer Antriebsmotor 5 untergebracht, der mit einer Keilriemenscheibe 6 versehen ist, von der über Keilriemen 7 und eine weitere Keilriemenscheibe 8 eine Antriebswelle 9 drehantreibbar ist. Die Antriebswelle 9 ist im Ständer 1 mittels mehrerer Lager 10 drehbar gelagert.

Auf dem Tragarm 4 ist in entsprechenden Aufnahmen 11 ein im wesentlichen zylindrischer Mahlbehälter 12 abgestützt. Der Mahlbehälter 12 weist eine zylindrische Wand 13 auf und ist an einem, dem Ständer 1 zugewandten Ende mittels eines Deckels 14 und am gegenüberliegenden Ende mittels eines Bodens 15 verschlossen. Er umschließt einen Mahlraum 16.

Konzentrisch zur gemeinsamen Mittel-Längs-Achse 17 von Mahlbehälter 12 und Antriebswelle 9 ist im Mahlraum 16 eine Rührwerks-Welle 18 angeordnet, die den Deckel 14 durchsetzt. Der Mahlraum 16 ist mittels Dichtungen 19 zwischen dem Deckel 14 und der Welle 18 abgedichtet. Die Welle 18 ist fliegend gelagert, also im Bereich des Bodens 15 nicht mehr gelagert. Sie ist über ihre Länge im Mahlraum 16 mit Rührwerkzeugen 20 versehen, bei denen es sich im vorliegenden Fall um Rührscheiben 21 handelt. Diese Rührscheiben 21 können - wie in Fig. 1 rechts dargestellt - zusätzlich mit sich parallel zur Achse 17 erstreckenden, in Form eines Käfigs angeordneten Rührstäben 22 versehen sein, mittels derer die Zentrifugalkräfte erhöht werden.

Am Mahlbehälter 12 ist - benachbart zum Deckel 14 - ein Zulaufstutzen 23 angebracht, durch den zu behandelndes Gut, in der Regel also Schlamm, zugeführt wird. An der unten liegenden Seite der Wand 13 des Mahlbehälters 12 ist eine sich über einen wesentlichen Teil der Länge des Mahlbehälters 12 zwischen den Aufnahmen 11 erstreckende Entleerungsklappe 24 angebracht.

Bei allen Ausführungsformen ist der Mahlbehälter 12 mit einem Auslaß versehen, der bei den verschiedenen Ausführungsformen unterschiedlich ausgestaltet ist. Gemeinsam ist allen Auslässen, daß eine Mahlhilfskörper-Rückhaltevorrichtung, wie sie bei Rührwerksmühlen generell üblich ist, nicht vorgesehen ist. Bei derartigen Mahlhilfskörper-Rückhaltevorrichtungen handelt es sich entweder um Siebe in vielerlei Ausgestaltungen oder um sogenannte Trennspalt-Abtrennvorrichtungen, wie sie beispielsweise in der DE-PS 14 82 391 (entspr. GB-PS 1 056 257) beschrieben sind.

Bei der Ausführungsform nach Fig. 1 ist im Boden 15 koaxial zur Achse 17 ein Auslaß-Rohr 25 angeordnet, das stirnseitig mit einer Öffnung 26 versehen ist. Dieses Auslaß-Rohr 25 reicht bis in die Nähe der Rührwerks-Welle 18, d.h. bis in die Nähe der endseitigen Rührscheibe 21. An dieser endseitigen Rührscheibe 21 ist ein beispielsweise kegelstumpfförmiger, zum Boden 15 hin offener kurzer Rohr-Abschnitt 27 angebracht, der zum Boden 15 einen Durchtrittskanal 28 frei läßt. Das Auslaß-Rohr 25 und der Rohr-Abschnitt 27 überdecken einander in Richtung der Achse 17.

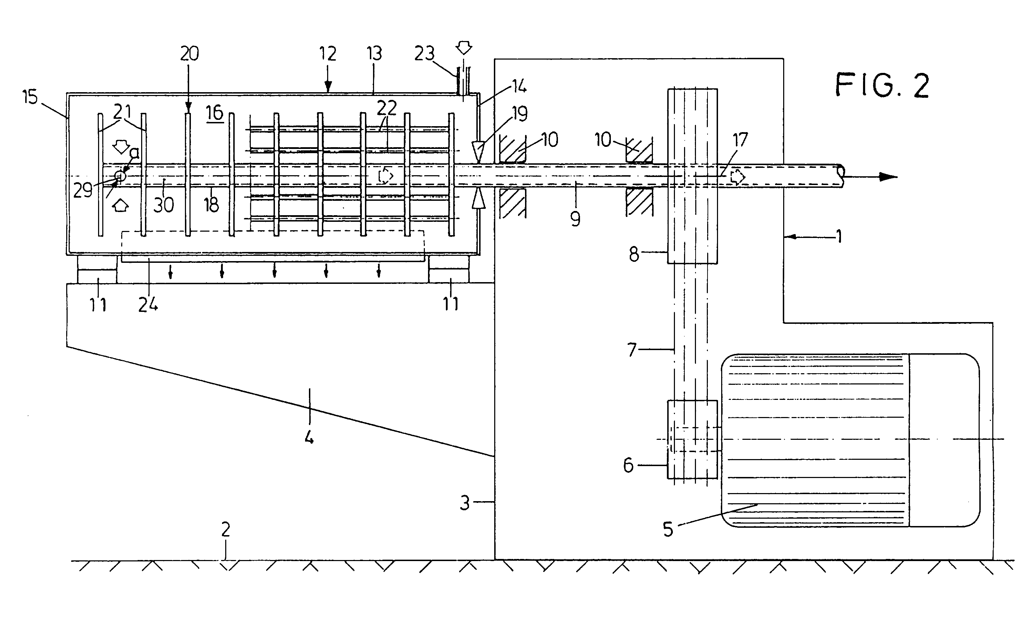

Bei der Ausführungsform nach Fig. 2 ist die Rührwerks-Welle 18 benachbart zu ihrem freien Ende, und zwar zwischen den beiden letzten Rührscheiben 21, mit Auslaß-Öffnungen 29 versehen, die in einen Ablaufkanal 30 in der hohlen Rührwerks-Welle 18 einmünden. Der Ablaufkanal 30 mündet im Bereich des außerhalb des Mahlbehälters 12 liegenden Endes der Rührwerks-Welle 18 aus dieser aus. Zur Verstärkung des Zentrifugaleffektes können im Bereich der Öffnung 29 die erwähnten Rührstäbe 22 sein.

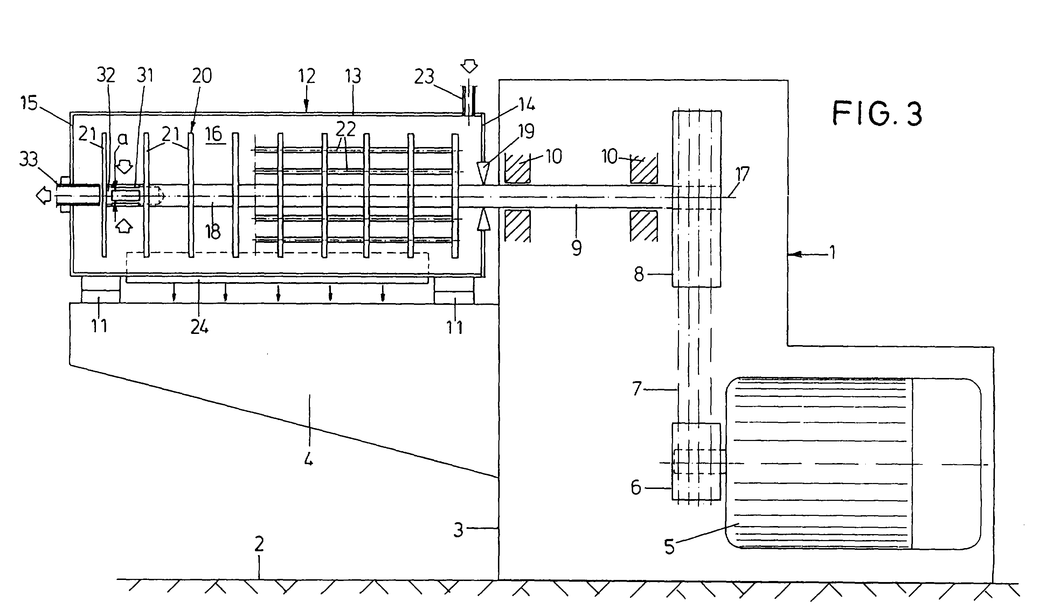

Bei der Ausführungsform nach Fig. 3 ist die Rührwerks-Welle 18 im Bereich ihres freien Endes und auch dort zwischen den beiden letzten einander benachbarten Rührscheiben 21 mit Auslaß-Öffnungen 31 versehen, die in einen zum freien Ende der Rührwerks-Welle 18 hin offenen Ablaufkanal 32 einmünden. Dieser mündet wiederum in ein im Boden 15 angeordnetes Auslaß-Rohr 33, das mit seiner Stirnseite gegenüber dem freien Ende der Rührwerks-Welle 18 nur einen möglichst kleinen Spalt frei läßt.

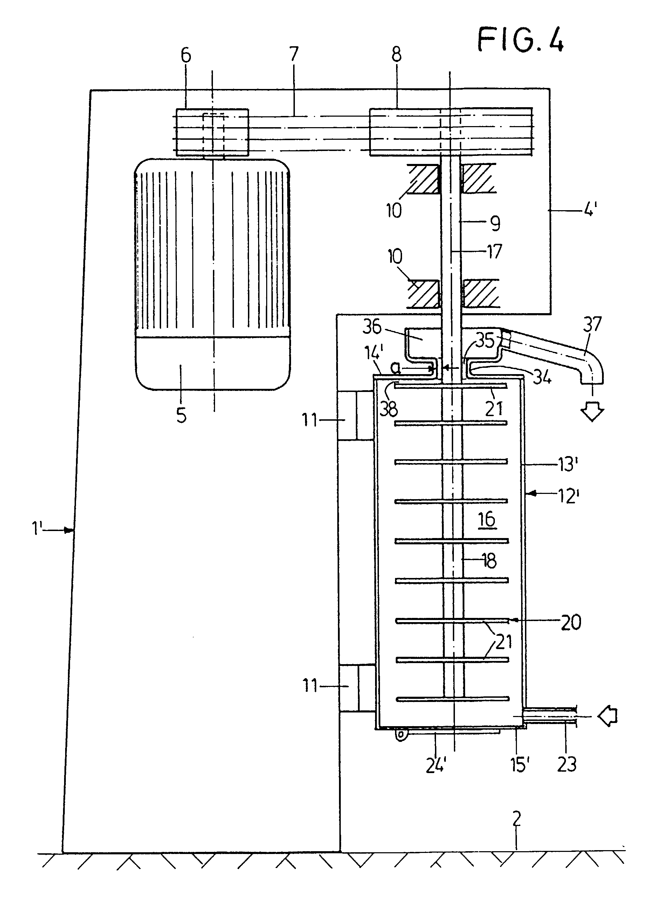

Die Ausführungsform nach Fig. 4 wird durch eine vertikale Rührwerksmühle gebildet. Soweit die Teile identisch sind, werden gleiche Bezugsziffern wie bei den Fig. 1 bis 3 verwendet, soweit einzelne Teile nur konstruktiv unterschiedlich, funktionell aber gleich sind, werden die gleichen Bezugsziffern wie bei den Ausführungsformen nach den Fig. 1 bis 3 verwendet, jedoch mit einem hochgesetzten Strich versehen. Der Zulaufstutzen 23 ist hierbei im Bereich des unten liegenden Bodens 15' vorgesehen, der mit einer Entleerungsklappe 24' versehen ist. Der Auslaß ist im Deckel 14' untergebracht, wo gegenüber der Rührwerks-Welle 18 keine Dichtung notwendig bzw. vorgesehen ist. Der Auslaß wird durch einen die Rührwerks-Welle 18 umgebenden Auslaß-Stutzen 34 gebildet, zwischen dem und der Welle 18 ein ringförmiger Auslaß-Kanal 35 begrenzt wird. Dieser mündet in eine oberhalb des Deckels 14' befindliche Auslaß-Tasse 36, aus der wiederum eine Abfuhr-Leitung 37 ausmündet.

Die dem Deckel 14' benachbarte Rührscheibe 21 ist nur unter Freilassung eines sehr schmalen Auslaßspaltes 38 zum Deckel 14' angeordnet, so daß gerade im Auslaßspalt 38 hohe Zentrifugalkräfte erzeugt werden.

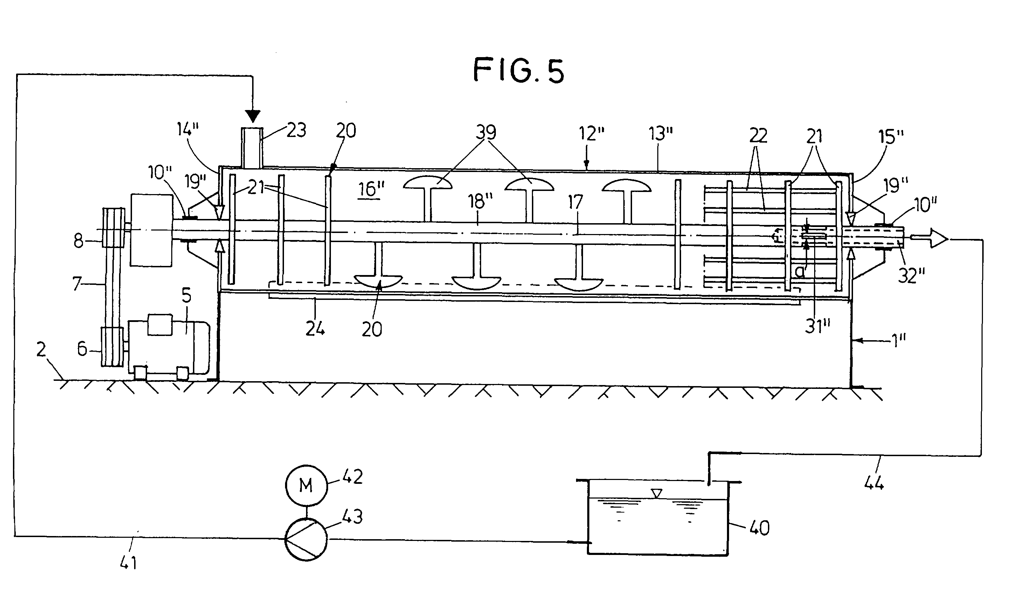

Während die Ausführungsformen nach den Fig. 1 bis 4 Rührwerksmühlen sind, ist die Ausführungsform nach Fig. 5 nach Art eines hochtourig antreibbaren Mischers aufgebaut. Mit den Ausführungsformen nach den Fig. 1 bis 3 funktionell gleichartige Teile werden mit den gleichen Bezugsziffern versehen, denen jedoch ein hochgesetzter Doppelstrich beigefügt wird. Von einer erneuten Beschreibung wird insoweit Abstand genommen.

Die Rührwerks-Welle 18" ist einerseits in einem Lager 10" im Bereich des Deckels 14" und andererseits in einem Lager 10" im Bereich des Bodens 15" gelagert, d.h. sie ist nicht fliegend, sondern beidendig gelagert. Am Durchtritt der Rührwerks-Welle 18" durch den Deckel 14" einerseits und den Boden 15" andererseits sind Dichtungen 19" vorgesehen. Die Rührwerks-Welle 18" ist mit Rührwerkzeugen 20 versehen, bei denen es sich ebenfalls wieder um Rührscheiben 21 handeln kann; die Rührwerkzeuge 20 können aber auch als klassische schaufelartige Mischwerkzeuge 39 ausgebildet sein, wie es ebenfalls in Fig. 5 dargestellt ist.

Benachbart zum Deckel 14" ist ein Zulaufstutzen 23 vorgesehen, der in den Mahlraum 16" einmündet.

Benachbart zum Boden 15", und zwar auch dort zwischen den beiden letzten Rührscheiben 21, sind in der Rührwerks-Welle 18" Auslaß-Öffnungen 31" ausgebildet, die in einen in der Rührwerksmühle ausgebildeten Ablaufkanal 32" münden, der wiederum hinter dem deckelseitigen Lager 10" austritt. Auch hier können selbstverständlich die geschilderten Rührstäbe 22 vorgesehen werden.

Nur in Fig. 5 ist angedeutet, daß das Behandlungsgut dem Behandlungsprozeß mehrfach zugeführt wird. Hierzu ist ein Vorratsbehälter 40 vorgesehen, der über eine Zuführleitung 41 mit dem Zulaufstutzen 23 verbunden ist. In diese Zuführleitung 41 ist eine von einem Motor 42 angetriebene Pumpe 43 geschaltet, mittels derer der Transport des Behandlungsguts erfolgt. Der Ablaufkanal 32" ist wiederum über eine Rückführleitung 44 mit dem Vorratsbehälter 40 verbunden.

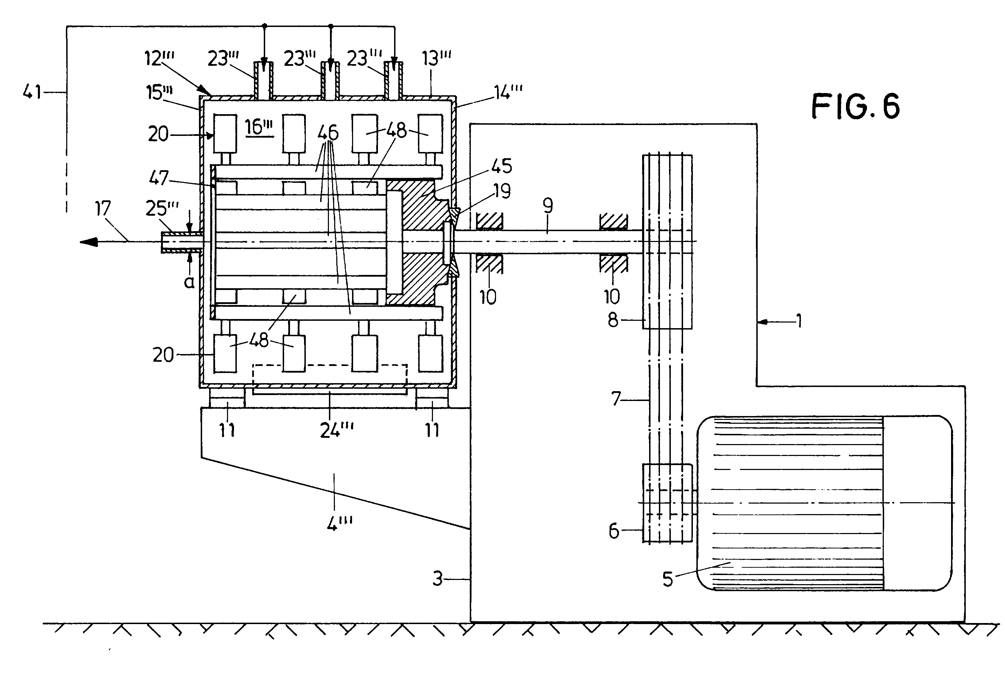

Bei der Ausführungsform nach Fig. 6 weist der Mahlbehälter 12"' über seine Länge zwischen dem Deckel 14"' und dem Boden 15"' verteilt mehrere Zulaufstutzen 23"' auf, die mittels einer gemeinsamen Zuführleitung 41 versorgt werden. Aus dem Boden 15"' mündet ein Auslaß-Rohr 25"' aus, das konzentrisch zur Mittel-Längs-Achse 17 verläuft. Die Antriebswelle 9 ist mit einem topfförmigem Rührwerk versehen, das aus einer an der Antriebswelle 9 angebrachten Rotorscheibe 45 gebildet ist, an dem parallel und konzentrisch zur Mittel-Längs-Achse 17 verlaufende, sich im wesentlichen über die Länge des Mahlbehälters 12"' erstreckende Stäbe 46 angebracht sind, die an ihren benachbart zum Boden 15"' befindlichen Enden zur Aussteifung mit einem Verbindungsring 47 verbunden sein können. Die Rotorscheibe 45 mit den Stäben 46 bildet daher eine Art Käfig. An den Stäben 46 sind als Rührwerkzeuge 20 dienende Schaufeln bzw. Paddel 48 angebracht, die sich bis in die Nähe der Wand 13"' des Mahlbehälters 12"' erstrecken. Die Rührwerkzeuge 20 überstreichen also nur den radial außenliegenden Bereich des Mahlraumes 16"'. Im übrigen sind in Fig. 6 dieselben Bezugsziffern wie in den vorherigen Figuren verwendet worden, soweit Teile identisch sind. Soweit Teile funktionell identisch, aber konstruktiv geringfügig anders sind, sind sie mit derselben Bezugsziffer aber mit einem hochgesetzten Dreifachstrich bezeichnet.

Die geschilderten Ausführungsformen von kontinuierlich arbeitenden Vorrichtungen werden in der Regel in Kläranlagen eingesetzt, um den dort an unterschiedlichen Stellen anfallenden Schlamm einem mechanischen Zellaufschluß zu unterwerfen. Wie sich aus den vorstehenden Erläuterungen ergibt, arbeiten alle Vorrichtungen kontinuierlich. Jeder Schlamm, der noch organische Bestandteile mit mechanisch aufschließbaren Zellwänden aufweist, ist für diese mechanische Behandlung geeignet. Außer den organischen Anteilen enthält der Schlamm auch eine Reihe von anorganischen Bestandteilen. Bei beispielsweise durch Sedimentation gewonnenem Frischschlamm oder bereits durch einen Rechen von groben Verunreinigungen befreitem Rohschlamm beträgt vor einem solchen mechanischen Zellaufschluß der organische Anteil bezogen auf die Trockensubstanz ca. 60 Gew.% und der anorganische Anteil somit 40 Gew.%. Weiterhin kann auch aus einer Flotation kommender Rücklaufschlamm der mechanischen Behandlung unterworfen werden. Weiterhin ist es möglich, den verschiedenen Ausführungsformen von Vorrichtungen aus einem Faulturm ausgetragenen Faulschlamm zuzuführen, um auch bei diesem einen mechanischen Zellaufschluß durchzuführen. Bei aus einem Faulbehälter ausgetragenem Faulschlamm liegt - ebenfalls bezogen auf die Trockensubstanz - der organische Anteil üblicherweise bei ca. 50 Gew.% und demzufolge der anorganische Anteil ebenfalls bei 50 Gew.%. Gerade derartiger Faulschlamm kann ohne weiteres im Kreislauf geführt werden, indem dem Faulbehälter Faulschlamm entnommen, dieser in einer Vorrichtung einem mechanischen Zellaufschluß unterworfen und dann wieder dem Faulbehälter zugeführt wird.

Bei den anorganischen Bestandteilen handelt es sich um feindispersen Sand und zahlreiche unlösliche Metallverbindungen, üblicherweise in Form von Salzen, beispielsweise Calciumphosphat, Calciumcarbonat, Eisenphosphat, usw. Das geschilderte Behandlungsgut wird dem Mahlbehälter 12 bzw. 12' bzw. 12" bzw. 12"' durch den Zulaufstutzen 23 bzw. die Zulaufstutzen 23"' zugeführt und durch die hochtourig mit der Rührwerks-Welle 18 bzw. 18" umlaufenden Rührwerkzeuge 20 intensiv beaufschlagt. Die Mahlbehälter 12 bzw. 12' bzw. 12" bzw. 12"' sind mit dem Behandlungsgut vollständig gefüllt. Dieses noch unbehandelte Behandlungsgut weist nur einen kleinen Anteil anorganischer Bestandteile mit einem größeren Partikeldurchmesser, beispielsweise > 100 µm, auf. Diese im Behandlungsgut enthaltenen anorganischen Partikel größeren Durchmessers werden aufgrund ihrer größeren Dichte im Vergleich zu den organischen Bestandteilen in den Außenbereich, d.h. in Richtung zur Wand 13 bzw. 13" bzw. 13"' des Mahlbehälters 12, 12', 12" bzw. 12"' geschleudert. Sie bilden einen Materialring in der Nähe der jeweiligen Wand 13, 13" bzw. 13"'. Da das Behandlungsgut im Bereich der Achse 17 bzw. der Welle 18 bzw. 18" durch die geschilderten Auslässe 25, 29, 31, 31", 34, 25"' aus dem Mahlraum 16, 16", 16"' austritt, verbleiben diese größeren anorganischen Partikel - und naturgemäß auch kleinere anorganische Partikel - im Mahlraum 16, 16", 16"'; sie werden im Mahlraum 16, 16", 16"' aufkonzentriert. Diese von den Rührwerkzeugen 20 aktivierten Partikel bewirken als Mahlhilfskörper den Aufschluß des Behandlungsgutes durch Zerstörung der Zellwände der organischen Bestandteile des Behandlungsgutes. Soweit derartige anorganische Partikel größeren Durchmessers mit dem behandelten Mahlgut ausgetragen werden, können sie nicht eine Rückhaltevorrichtung zusetzen, da eine solche nicht vorhanden ist. Entsprechendes gilt im Hinblick auf im Behandlungsgut vorhandene Fremdpartikel größeren Durchmessers. Alle Auslässe weisen eine minimale Weite a, die deutlich größer als die anorganischen Partikel größeren Durchmessers bzw. die vorhandenen Fremdpartikel größeren Durchmessers ist. Die minimale Weite a eines Auslasses beträgt mindestens 5 mm in der Regel mindestens 10 mm.

Die Entleerungsklappe 24 bzw. 24' bzw. 24" bzw. 24"' kann dazu verwendet werden, anorganische Verunreinigungen bei Bedarf zu entfernen. Der Anteil der anorganischen unlöslichen Partikel im Mahlraum 16, 16", 16"' sollte sehr hoch sein, um den mechanischen Zellaufschluß möglichst intensiv durchzuführen. Damit eine starke Aufkonzentration solcher anorganischen Partikel im Mahlraum erfolgt, müssen die Rührwerksdrehzahl einerseits und der Durchsatz des Behandlungsgutes andererseits einander optimal angepaßt werden. Als Kennzahl hierfür kann die Leistungsaufnahme des Antriebsmotors 5 bzw. 5" oder aber dessen Stromaufnahme dienen. Grundsätzliches Ziel einer Regelung ist es, ein Maximum der Leistungsaufnahme zu erreichen. Dies wird wiederum erreicht durch eine hohe Konzentration von anorganischen Partikeln großen Durchmessers. Wenn bei einer Steigerung des Durchsatzes die Leistungsaufnahme abnimmt, so ist daraus zu schließen, daß die anorganischen Partikel größeren Durchmessers aus dem Mahlraum 16, 16" mit dem behandelten Mahlgut ausgetragen werden, so daß der Mahleffekt verringert wird. In diesem Fall muß entweder der Durchsatz an Behandlungsgut reduziert werden, oder aber bei Vorhandensein eines drehzahlregelbaren Antriebsmotors 5 die Drehzahl der Rührwerkswelle 18, 18" erhöht werden.

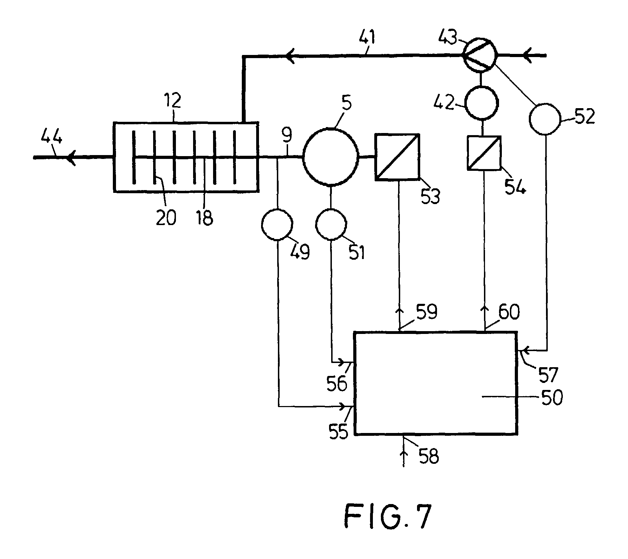

Konkret kann die Regelung in der in Fig. 7 dargestellten Weise durchgeführt werden. Mit der Antriebswelle 9 und damit mit der Rührwerks-Welle 18 ist eine Drehzahl-Erfassungseinheit 49 verbunden, die ein der Drehzahl entsprechendes Signal auf eine Regel- und Steuereinrichtung 50 gibt. Es wird weiterhin die Leistungsaufnahme des Antriebsmotors 5 mittels eines Leistungs-Erfassungsgerätes 51 aufgenommen und an die Regel- und Steuereinrichtung 50 gegeben. Es ist weiterhin der Pumpe 43 ein Durchsatz-Erfassungseinrichtung zugeordnet, die ein dem Durchsatz pro Zeiteinheit entsprechendes Signal an die Regel-Steuereinrichtung 50 abgibt. Bei der Durchsatz-Erfassungseinrichtung 52 kann es sich um ein Drehzahlmeßgerät handeln, da bei schlupffrei oder mit konstantem Schlupf arbeitenden Pumpen die Drehzahl ein Maß für den Durchsatz ist. Weiterhin ist dem Antriebsmotor 5 eine Drehzahlverstellvorrichtung 53 zugeordnet, bei der es sich beispielsweise um einen Frequenzumrichter handeln kann. In gleicher Weise ist dem Antriebsmotor 42 der Pumpe 43 eine Drehzahlverstellvorrichtung 54 zugeordnet, bei der es sich ebenfalls um einen Frequenzumrichter handeln kann. Die Drehzahl der Antriebswelle 9, die Leistungsaufnahme des Antriebsmotors 5 und der Durchsatz der Pumpe 43 werden als Eingänge 55, 56, 57 in die Regel- und Steuereinrichtung 50 eingegeben. Weiterhin wird ein Sollwert für die Leistungsaufnahme über einen Eingang 58 in die Regel- und Steuereinrichtung 50 eingegeben. Von der Regel- und Steuereinrichtung 50 wird nach dem vorstehend angegebenen Regelungsschema über Ausgänge 59, 60 die Drehzahlverstellvorrichtung 53 des Antriebsmotors 5 und die Drehzahlverstellvorrichtung des Motors 41 der Pumpe 43 angesteuert. Im ersten Fall wird die Drehzahl des Rührwerks geändert; im zweiten Fall wird der Durchsatz der Pumpe 43 geändert.

## Patentansprüche

1. Verfahren zum kontinuierlichen Aufschließen von organischen Bestandteilen eines fließfähigen, unlösliche anorganische Partikel enthaltenden Behandlungsguts, insbesondere von Schlamm,
wobei das Behandlungsgut in einem Behandlungsraum (16, 16", 16"') konzentrisch zu einer Achse (Mittel-Längs-Achse 17) in Rotation versetzt wird und
wobei die unlöslichen anorganischen Partikel im Behandlungsraum (16, 16", 16"') aufkonzentriert werden.

2. Verfahren nach Anspruch 1, wobei die anorganischen Partikel größerer Dichte und/oder größeren Durchmessers im Vergleich zu Partikeln kleineren Durchmessers überproportional aufkonzentriert werden.

3. Verfahren nach Anspruch 1 oder 2, wobei Behandlungsgut - bezogen auf die Achse (Mittel-Längs-Achse 17) - an einem Ende des Behandlungsraums (16, 16") zugeführt und am anderen Ende im Bereich der Achse (Mittel- Längs-Achse 17) aus dem Behandlungsraum (16, 16") abgeführt wird.

4. Verfahren nach Anspruch 1 oder 2, wobei Behandlungsgut - bezogen auf die Achse (Mittel-Längs-Achse 17) - über die Länge des Behandlungsraumes (16"') zugeführt und an einem Ende im Bereich der Achse (Mittel-Längs-Achse 17) aus dem Behandlungsraum (16"') abgeführt wird.

5. Verfahren nach einem der Ansprüche 1 bis 4, wobei bei Austrag von anorganischen Partikeln größerer Dichte und/oder größeren Durchmessers aus dem Behandlungsraum (16, 16", 16"') die Zufuhr von Behandlungsgut zum Behandlungsraum (16, 16", 16"') reduziert und/oder die Rotation vergrößert wird.

6. Vorrichtung zur Durchführung des Verfahrens nach einem der Ansprüche 1 bis 5,
mit einem einen mahlhilfskörperfreien Mahlraum (16, 16", 16"') umschließenden Mahlbehälter (12, 12', 12", 12"'),
mit einem konzentrisch zur Achse (Mittel-Längs-Achse 17) des Mahlbehälters (12, 12', 12", 12"') in diesem drehbar angeordneten Rührwerk,
mit an dem Rührwerk angebrachten Rührwerkzeugen (20),
mit einem mit dem Rührwerk gekoppelten Antriebsmotor (5, 5"),
mit mindestens einem in den Mahlraum (16, 16", 16"') mündenden Zulaufstutzen (23, 23"') für Behandlungsgut und
mit mindestens einem im Bereich der Achse (Mittel-Längs-Achse 17) angeordneten, keine Mahlhilfskörper-Rückhaltevorrichtung aufweisenden Auslaß (Auslaß-Rohr 25, 25"',
Auslaß-Öffnung 29, Auslaß-Öffnung 31, 31", Auslaß-Stutzen 34) für behandeltes Behandlungsgut.

7. Vorrichtung nach Anspruch 6, wobei der Auslaß durch ein konzentrisch zu einer fliegend gelagerten Rührwerks-Welle (18) angeordnetes und zu dieser stirnseitig offenes Auslaß-Rohr (25) gebildet ist.

8. Vorrichtung nach Anspruch 7, wobei das Auslaß-Rohr (25) zumindest teilweise von einem mit der Rührwerks-Welle (18) verbundenen Rohr-Abschnitt (27) in Richtung der Achse (Mittel-Längs-Achse 17) überdeckt ist.

9. Vorrichtung nach Anspruch 7 oder 8, wobei zwischen dem Rohr-Abchnitt (27) und einem benachbarten Boden (15) des Mahlbehälters (12) und/oder zwischen dem Auslaß-Rohr (25) und der Rührwerks-Welle (18) ein Durchtrittskanal (28) ausgebildet ist.

10. Vorrichtung nach einem der Ansprüche 6 bis 9, wobei der Auslaß durch mindestens eine Auslaß-Öffnung (29, 31, 31") gebildet ist, die in einer Rührwerks-Welle (18, 18") ausgebildet ist und in einen in der Rührwerks- Welle (18, 18") befindlichen Ablaufkanal (30, 32, 32") einmündet.

11. Vorrichtung nach einem der Ansprüche 6 bis 10, wobei der Auslaß durch einen eine Rührwerks-Welle (18) umgebenden ringförmigen Auslaß-Kanal (35) gebildet ist.

12. Vorrichtung nach Anspruch 11, wobei der Auslaß-Kanal (35) durch einen in einem Deckel (14') des Mahlbehälters (12') ausgebildeten, eine Durchführung für die Rührwerks-Welle (18) bildenden Auslaß-Stutzen (34) begrenzt wird.

13. Vorrichtung nach einem der Ansprüche 6 bis 12, wobei unmittelbar benachbart zu einem Auslaß (Auslaß-Rohr 25, 25"' Auslaß-Öffnung 29, Auslaß-Öffnung 31, 31", Auslaß-Stutzen 34) mindestens ein Rührwerkzeug (20) vorgesehen ist.

14. Vorrichtung nach den Ansprüchen 10 und 13, wobei - bezogen auf die Achse (Mittel-Längs-Achse 17) - beiderseits der mindestens einen Auslaß-Öffnung (29, 31, 31") jeweils mindestens ein Rührwerkzeug (20) an der Rührwerks-Welle (18, 18") angebracht ist.

15. Vorrichtung nach einem der Ansprüche 6 bis 14, wobei die Rührwerkzeuge (20) durch Rührscheiben (21) gebildet sind.

16. Vorrichtung nach einem der Ansprüche 6 bis 15, insbesondere nach Anspruch 14, wobei an den Rührwerkzeugen (20) etwa parallel zur Achse (Mittel-Längs-Achse 17) nach Art eines Käfigs angeordnete Rührstäbe (22) vorgesehen sind.

17. Vorrichtung nach einem der Ansprüche 6 bis 16, insbesondere nach einem der Ansprüche 6 bis 9 und 12 bis 15, wobei der Mahlbehälter (12, 12", 12"') etwa waagerecht angeordnet ist.

18. Vorrichtung nach einem der Ansprüche 6 bis 16, insbesondere nach einem der Ansprüche 6 und 11 bis 16, wobei der Mahlbehälter (12') im wesentlichen vertikal angeordnet ist und wobei der Zulaufstutzen (23) in den unteren Bereich des Mahlbehälters (12') einmündet und wobei der Auslaß (Auslaß-Kanal 35) im oberen Bereich des Mahlbehälters (12') vorgesehen ist.

19. Vorrichtung nach Anspruch 17, wobei in der zylindrischen Wand des Mahlbehälters (12, 12", 12"') eine Entleerungsklappe (24, 24", 24"') angeordnet ist.

20. Vorrichtung nach Anspruch 18, wobei im Boden (15') eine Entleerungsklappe (24') vorgesehen ist.

21. Vorrichtung nach Anspruch 6, wobei das Rührwerk nach Art eines topfförmigen Käfigs mit parallel und konzentrisch zur Achse (Mittel-Längs-Achse 17) verlaufenden Stäben (46) ausgebildet ist, an denen Rührwerkzeuge (20) nach Art von Schaufeln bzw. Paddeln (48) angebracht sind.

22. Vorrichtung nach Anspruch 6, wobei mehrere über die Länge des Mahlbehälters (12"') an dessen Wand (13"') verteilt angeordnete Zulaufstutzen (23"') in den Mahlraum (16"') einmünden.

23. Vorrichtung nach Anspruch 6, wobei der mindestens eine Auslaß (Auslaß-Rohr 25, 25"', Auslaß-Öffnung 29, Auslaß-Öffnung 31, 31", Auslaß-Stutzen 34) für behandeltes Behandlungsgut eine minimale Weite (a) von mindestens 5 und vorzugsweise mindestens 10 mm hat.

24. Vorrichtung nach einem der Ansprüche 6 bis 23, wobei eine Regel- und Steuereinrichtung (50) zur Erhöhung der Drehzahl des Rührwerks und/oder zur Reduktion der Zufuhr von Behandlungsgut bei Abfall der Leistungsaufnahme des Antriebsmotors (5, 5") vorgesehen ist.

## Claims

1. A method of continuously solubilizing organic compounds of a free flowing material containing insoluble inorganic particles, in particular of sludge,
wherein the material is set rotating in a treating chamber (16, 16", 16"') concentrically of an axis (central longitudinal axis 17), and
wherein the insoluble inorganic particles are concentrated in the treating chamber (16, 16", 16"').

2. A method according to claim 1, wherein the inorganic particles of higher density and/or greater diameter are concentrated superproportionally as compared to particles of smaller diameter.

3. A method according to claim 1 or 2, wherein - relative to the axis (central longitudinal axis 17) - material is supplied at one end of the treating chamber (16, 16") and discharged from the treating chamber (16, 16") at the other end in the vicinity of the axis (central longitudinal axis 17).

4. A method according to claim 1 or 2, wherein - referred to the axis (central longitudinal axis 17) - material is supplied over the length of the treating chamber (16") and discharged from the treating chamber (16"') at one end in the vicinity of the axis (central longitudinal axis 17).

5. A method according to one of claims 1 to 4, wherein upon delivery of inorganic particles of higher density and/or greater diameter from the treating chamber (16, 16", 16"), the supply of material to the treating chamber (16, 16", 16"') is reduced and/or rotation is increased.

6. An apparatus for putting the method according to one of claims 1 to 5 into practice, comprising
a grinding receptacle (12, 12', 12", 12"'), which encloses a grinding chamber (16, 16", 16"') that is free from auxiliary grinding bodies;
an agitator element, which is disposed for rotation in the grinding receptacle (12, 12', 12", 12"') concentrically of the axis (central longitudinal axis 17) thereof;
agitator implements (20) mounted on the agitator element;
a driving motor (5, 5") coupled with the agitator element;
at least one material supply connector (23, 23"'), which opens into the grinding chamber (16, 16", 16"'); and
at least one treated-material outlet (outlet pipe 25, 25"', outlet opening 29, outlet opening 31, 31", outlet connector 34), which is disposed in the vicinity of the axis (central longitudinal axis 17) and does not comprise an auxiliary-grinding-body retaining device.

7. An apparatus according to claim 6, wherein the outlet is formed by an outlet pipe (25), which is disposed concentrically of an over-mounted agitator shaft (18) and frontally open relative thereto.

8. An apparatus according to claim 7, wherein the outlet pipe (25) is overlapped at least partially in the direction of the axis (central longitudinal axis 17) by a pipe section (27) which is joined to the agitator shaft (18).

9. An apparatus according to claim 7 or 8, wherein a passageway (28) is formed between the pipe section (27) and an adjacent bottom (15) of the grinding receptacle (12) and/or between the outlet pipe (25) and the agitator shaft (18).

10. An apparatus according to one of claims 6 to 9, wherein the outlet is formed by at least one outlet opening (29, 31, 31"), which is formed in an agitator shaft (18, 18") and opens into an outlet channel (30, 32, 32") located in the agitator shaft (18, 18").

11. An apparatus according to one of claims 6 to 10, wherein the outlet is formed by an annular outlet channel (35) surrounding the agitator shaft (18).

12. An apparatus according to claim 11, wherein the outlet channel (35) is defined by an outlet connector (34), which is formed in a cover (14') of the grinding receptacle (12') and constitutes a passage for the agitator shaft (18).

13. An apparatus according to one of claims 6 to 12, wherein at least one agitator implement (20) is provided in direct vicinity to an outlet (outlet pipe 25, 25", outlet opening 29, outlet opening 31, 31", outlet connector 34).

14. An apparatus according to claims 10 and 13, wherein - relative to the axis (central longitudinal axis 17) - on both sides of the at least one outlet opening (29, 31, 31"), at least one agitator implement (20) is mounted on the agitator shaft (18, 18").

15. An apparatus according to claims 6 to 14, wherein the agitator implements (20) are agitator disks (21).

16. An apparatus according to one of claims 6 to 15, in particular according to claim 14, wherein agitator rods (22) are provided, which are disposed approximately parallel to the axis (central longitudinal axis 17) in the way of a cage on the agitator implements (20).

17. An apparatus according to one of claims 6 to 16, in particular according to one of claims 6 to 9 and 12 to 15, wherein the grinding receptacle (12, 12", 12"') is approximately horizontal.

18. An apparatus according to one of claims 6 to 16, in particular according to one of claims 6 and 11 to 16, wherein the grinding receptacle (12') is substantially vertical; and wherein the supply connector (23) opens into the lower portion of the grinding receptacle (12'); and wherein the outlet (outlet channel 35) is provided in the upper portion of the grinding receptacle (12').

19. An apparatus according to claim 17, wherein an evacuation flap (24, 24", 24"') is disposed in the cylindrical wall of the grinding receptacle (12, 12", 12"').

20. An apparatus according to claim 18, wherein an evacuation flap (24') is provided in the bottom (15').

21. An apparatus according to claim 6, wherein the agitator element is formed in the way of a cup-shaped cage, having rods (4) which are parallel and concentric to the axis (central longitudinal axis 17) and on which agitator implements (20) are mounted in the way of blades and paddles (48), respectively.

22. An apparatus according to claim 6, wherein several supply connectors (23"') open into the grinding chamber (16"'), which are distributed over the length of the grinding receptacle (12"') on the wall (13"') thereof.

23. An apparatus according to claim 6, wherein the at least one treated material outlet (outlet pipe 25, 25"', outlet opening 29, outlet opening 31, 31", outlet connector 34) has a minimum width (a) of at least 5 and preferably at least 10 mm.

24. An apparatus according to one of claims 6 to 23, wherein a control unit (50) is provided, augmenting the speed of the agitator element and/or reducing the supply of material upon drop of the power draw of the driving motor (5, 5").

## Revendications

1. Procédé pour la dissolution en continu de composants organiques d'une matière coulante contenant des particules inorganiques insolubles, en particulier de la boue,
la matière étant mise en rotation dans une zone de traitement (16,16",16"') concentriquement par rapport à un axe (axe longitudinal médian 17) et
les particules inorganiques insolubles étant reconcentrées dans la zone de traitement (16,16',16"').

2. Procédé selon la revendication 1, dans lequel on rencontre de façon surproportionnelle les particules inorganiques ayant une densité plus grande et/ou un diamètre plus grand en comparaison aux particules de plus petit diamètre.

3. Procédé selon la revendication 1 ou 2, dans lequel la matière, rapportée à l'axe (axe longitudinal médian 17) est amenée à une extrémité de l'espace de traitement (16, 16") et elle est évacuée sur l'autre extrémité au niveau de l'axe (axe longitudinal médian 17) à partir de la zone de traitement (16,16").

4. Procédé selon la revendication 1 ou 2, dans lequel la matière, rapportée à l'axe (axe longitudinal médian 17), est amenée sur la longueur de l'espace de traitement (16"')et elle est évacuée sur l'autre extrémité au niveau de l'axe (axe longitudinal médian 17) à partir de la zone de traitement (16"').

5. Procédé selon l'une des revendications 1 à 4, dans lequel l'évacuation des particules inorganiques de plus grande densité et/ou de plus grand diamètre en provenance de l'espace de traitement (16,16",16"') réduit l'amenée de matière à l'espace de matière (16,16",16"') et/ou agrandit la rotation.

6. Dispositif pour la réalisation du procédé selon l'une des revendications 1 à 5, avec un récipient de broyage (12,12',12",12"'), renfermant un espace de broyage exempt de matières de broyage auxiliaires avec un agitateur disposé de façon rotative concentriquement à l'axe (axe longitudinal médian 17) du récipient de broyage (12,12',12",12"') avec les outils d'agitation (20) disposés dans un agitateur, avec un moteur d'entraînement (5,5"), accouplé à l'agitateur, avec au moins une tubulure d'amenée (23,23"') aboutissant dans l'espace de broyage (16,16",16"') pour la matière et
avec au moins une évacuation disposée de niveau de l'axe (axe longitudinal médian 17) ne présentant pas de dispositif de retenue de corps auxiliaire de broyage (tube d'évacuation 25,25'", ouverture d'évacuation 29, ouverture d'évacuation 31,31", tubulure d'évacuation 34) pour la matière traitée.

7. Dispositif selon la revendication 6, dans lequel l'évacuation est constituée par un tube d'évacuation (25) disposé concentriquement par rapport à un arbre d'agitateur monté en porte-à-faux (18) et ouvert frontalement par rapport à celui-ci.

8. Dispositif selon la revendication 7, dans lequel le tube d'évacuation au moins partiellement est recouvert par une section de tube (27) raccordée à l'arbre de l'agitateur (18) en direction de l'axe (axe longitudinal médian 17).

9. Dispositif selon la revendication 7 ou 8, dans lequel entre la section de tube (27) et un fond contigu 15 du récipient de broyage (12) et/ou entre le tube d'évacuation (25) et l'arbre d'agitateur (18) est formé un canal de passage (28).

10. Dispositif selon l'une des revendications 6 à 9, dans lequel l'évacuation est formée par au moins une ouverture d'évacuation (29,31,31") qui est ménagée dans un arbre d'agitateur (18,18") et qui aboutit dans un canal d'évacuation (30,32,32") se trouvant dans l'arbre d'agitateur (18,18").

11. Dispositif selon l'une des revendications 6 à 10, dans lequel l'évacuation est constituée par un canal d'évacuation (35) circulaire entourant un arbre d'agitateur (18) .

12. Dispositif selon la revendication 11, dans lequel le canal d'évacuation (35) est limité par une tubulure d'évacuation (34) formée dans un couvercle (14') du réservoir de broyage (12') formant un passage de traversée pour l'arbre d'agitateur (18).

13. Dispositif selon l'une des revendications 6 à 12, dans lequel directement de façon contiguë à une évacuation (tube d'évacuation 25,25"' ouverture d'évacuation 29, ouverture d'évacuation 31, 31", tubulure d'évacuation 34), il est prévu au moins un outil d'agitation (20).

14. Dispositif selon les revendications 10 et 13, dans lequel, rapporté à l'axe (axe longitudinal médian 17) des deux côtés d'au moins une ouverture d'évacuation (29,31,31") est disposé chaque fois au moins un outil d'agitateur (20) sur l'arbre d'agitateur (18,18").

15. Dispositif selon l'une des revendications 6 à 14, dans lequel les outils d'agitateur (20) sont constitués par des disques d'agitation (21).

16. Dispositif selon l'une des revendications 6 à 15, en particulier selon la revendication 14, dans lequel sur les outils d'agitateur (20), sensiblement parallèlement à l'axe (axe longitudinal médian 17), sont prévus des barres d'agitation (22) disposées à la manière d'une cage.

17. Dispositif selon l'une des revendications 6 à 16, en particulier selon l'une des revendications 6 à 9 et 12 à 15, le récipient de broyage (12,12",12"') étant disposé sensiblement horizontalement.

18. Dispositif selon l'une des revendications 6 à 16, en particulier selon l'une des revendications 6 et 11 à 16, le récipient de broyage (12') étant disposé sensiblement verticalement et la tubulure d'entrée (23) aboutissant dans la zone inférieure du récipient de broyage (12') et l'évacuation (canal d'évacuation 35 étant prévu dans la partie supérieure du récipient de broyage 12').

19. Dispositif selon la revendication 17, dans lequel dans la paroi cylindrique du récipient de broyage (12,12",12"') il est prévu un clapet de vidange (24,24",24"').

20. Dispositif selon la revendication 18, dans lequel dans le fond (15') il est prévu un clapet de vidange (24').

21. Dispositif selon la revendication 6, dans lequel l'agitateur est conçu à la manière d'une cage en forme de marmite avec des barres (46) s'étendant parallèlement et concentriquement à l'axe (axe longitudinal médian 17) sur lesquelles sont disposés des outils d'agitation (20) en forme d'aubes ou de palettes (48).

22. Dispositif selon la revendication 6, dans lequel plusieurs tubulures (23"') sont disposées de façon répartie sur la longueur de la paroi (13"') du récipient de broyage (12"') et débouchent dans la zone de broyage (16"').

23. Dispositif selon la revendication 6, dans lequel au moins une évacuation (tube d'évacuation 25,25"') ouverture d'évacuation 29, ouverture d'évacuation 31, 31", tubulure d'évacuation 34) pour la matière traitée présente une largeur minimale (a) d'au moins 5 et de préférence d'au moins 10 mm.

24. Dispositif selon l'une des revendications 6 à 23, dans lequel il est prévu un dispositif de régulation et de commande (50) pour augmenter le nombre de tours de l'agitateur et/ou pour réduire l'amenée de matière en cas de chute de la puissance absorbée du moteur d'entraînement (5,5").
